# EUROPEAN PATENT SPECIFICATION

(11) **EP 3 912 443 B1**
(45) Date of publication and mention of the grant of the patent: **21.09.2022**
(21) Application number: 21169159.7
(22) Date of filing: 19.04.2021
(51) Int. Cl.: A01B 39/08, A01B 39/16, A01B 61/04, A01B 63/02, F16F 1/00

(54) **SOIL-DRIVEN ROTARY HOE FOR TILLAGE OF PLANT SPACINGS**
BODENBETRIEBENE BODENFRÄSE ZUR BEARBEITUNG VON RÄUMEN ZWISCHEN PFLANZEN
HOUE ROTATIVE ENTRAÎNÉE PAR LE SOL POUR LE LABOUR D'ESPACEMENTS ENTRE DES PLANTES

(30) Priority: 21.05.2020 HU 2000167
(43) Date of publication of application: 24.11.2021
(73) Proprietor: Vadkert-Agrotechnikai Kft, 6230 Soltvadkert (HU)
(72) Inventor: Nagy, Gábor, Soltvadkert (HU)
(74) Representative: Kacsuk, Zsófia

(56) References cited:
- EP-A1- 2 312 926
- EP-A1- 3 576 514
- EP-A2- 0 358 014
- FR-A1- 2 623 049
- FR-A1- 2 683 118
- JP-A- 2009 219 389

## Description

The present invention relates to a soil-driven rotary hoe, in particular for cultivating vine and fruit rows, having a support structure which can be suspended from a power machine or a towed structure and at least one hoe body fixed to the support structure by means of a fixing mechanism, said hoe body having a hoe wheel which is rotatably embedded about a rotation axis. The plane of rotation of the hoe wheel being at a first angle of 5 to 70° with the surface of the soil to be cultivated and the intersection of its plane of rotation with the plane of the surface of the soil forming a second angle of 5 to 80° with the direction of travel of the rotary hoeing machine. The hoe wheel has knives projecting from the direction of the axis of rotation and inclined backwards with respect to the natural direction of rotation of the hoe wheel. The fixing mechanism comprises a first spring deflection mechanism for forcing the at least one hoe body along a first axis towards the surface of the soil to be cultivated. The at least one hoe wheel (18) is arranged such that in the maximum deflection position of the first spring deflection mechanism (28) towards the soil to be cultivated, the hoe wheel (18) extends into the soil to a given cultivation depth.

For agricultural tillage, various rotary hoes are known, such as the rotary hoe shown in patent HU 230.201 (corresponding to EP 2312926), which allows the depth of tillage to be adjusted. Such rotary hoes are very well suited for cultivating unobstructed soils, but not for cultivating vineyards and fruit rows, as the trailed hoe head is not suitable for cultivating the plant spacings.

There are also agricultural tillage machines in which an artificially driven hoe head is pushed into and pulled out of the tillers by means of hydraulic actuators. However, artificial propulsion and hydraulic movement require the detection and complex control of obstacles, which is both expensive and complex, and also unreliable. In addition, if the hoe head is not retracted and/or stopped quickly enough, the stock or the root zone can be easily damaged, and premature retraction and/or stopping can result in poor quality tillage. The documents EP 0358014, FR 2623049, FR 2683118, JP 2009219389 and EP 3576514 describe further known rotary hoes.

It is an object of the present invention to provide a rotary hoe which is free from the disadvantages of prior art rotary hoes. In particular, it is an object of the present invention to provide a rotary hoe which is also suitable for cultivating a row of grapes and fruit, i.e. cultivating the gaps, and which automatically rolls off the trunk and the root zone during cultivation without damaging the vine stocks and fruit trees.

On the one hand, the invention is based on the surprising finding that, by combining purely soil-driven rotary hoe wheel with a spring mechanism that deflects the hoe wheel laterally, a rotary hoe is obtained which can automatically deflect out of the way of the vine stock or other trunk against the spring bias, while the soil-driven hoe wheel automatically rolls off the root zone, so that it can also safely cultivate the plant spacings.

According to the invention, this object is achieved by a soil-driven rotary hoe according to the introduction, wherein the fixing mechanism further comprises a second spring deflection mechanism forcing the at least one hoe body laterally along a second axis transverse to the direction of travel of the rotary hoe.

At the same time, in the maximum lateral deflection position of the second spring deflection mechanism, the hoe wheel extends laterally beyond the support structure and the fixing mechanism.

The at least one hoe wheel is arranged in such a way that, at the maximum ground deflection position of the first spring deflection mechanism, the hoe wheel extends into the soil to the given cultivation depth. At the same time, in the maximum lateral deflection position of the second spring deflection mechanism, the hoe wheel extends laterally beyond the support structure and the fixing mechanism.

Preferred embodiments of the invention are defined in the dependent claims.

Further details of the invention will be described with reference to the accompanying drawings.

In the drawings
Figure 1 is a perspective top view of a preferred embodiment of a soil-driven rotary hoe according to the invention;
Figure 2 is a side view of the embodiment of Figure 1;
Figure 3 is a rear view of the embodiment of Figure 1;
Figure 4 is an enlarged perspective view of one side of the fixing mechanism of the embodiment of Figure 1, and
Figure 5 is a schematic cross-sectional view of an exemplary embodiment of a guiding profile according to the invention.

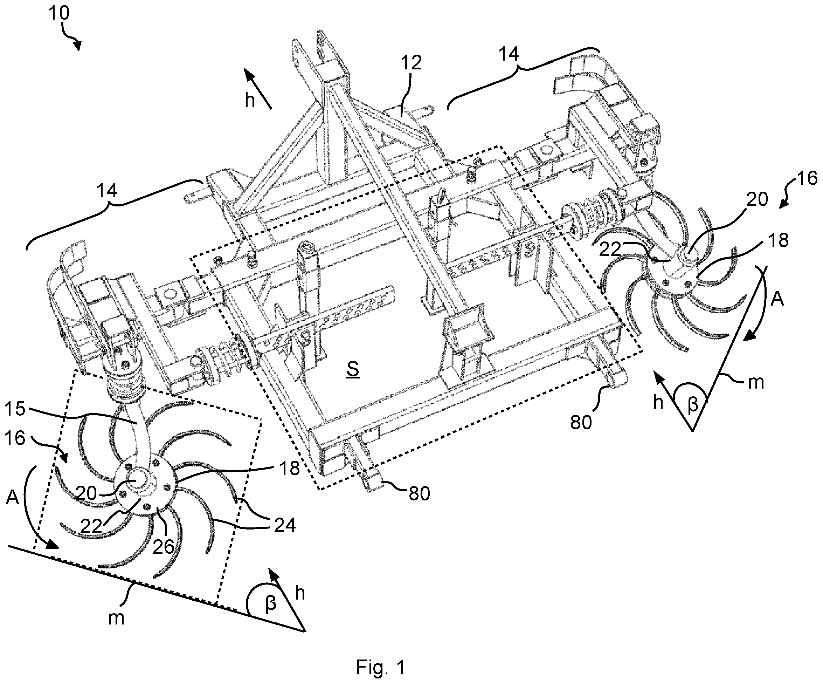

Figures 1-4 illustrate a preferred embodiment of a soil-driven rotary hoe 10 according to the invention. The rotary hoe 10 has a support structure 12, preferably made of steel, which is suspendable on a power machine or a towed structure as known in the art, to which a hoe body 16 of the rotary hoe 10 is connected via a fixing mechanism 14. In the present embodiment, there is a respective fixing mechanism 14 on each of the right and left sides of the support structure 12, and a respective hoe body 16 is attached to the suspension arm 15 of the fixing mechanism 14. Each of the two suspension arms 15 is preferably made of steel and is curved laterally outwardly (i.e. in the opposite direction to the support structure 12) so that the hoe body 16 extends laterally beyond the support structure 12 and the fixing mechanism 14, but of course other arrangements can be made to ensure that the hoe bodies 16 are positioned at rest on either side of the two edges of the rotary hoe 10.

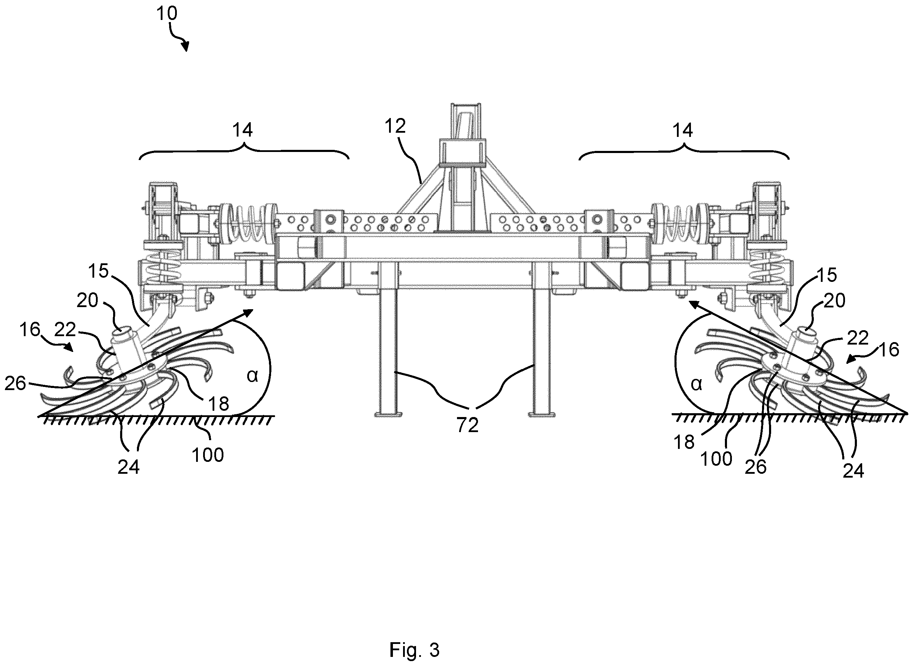

Each hoe body 16 has a hoe wheel 18 rotatably mounted about a rotation axis t, a central hub 20 of which is freely rotatably mounted in a housing 22 attached to the suspension arm 15. The hoe wheel 18 is adapted to rotate under the action of interaction with the soil during traction. This is achieved, on the one hand, by tilting the hoe wheels 18 backwards (in the direction opposite to the direction of traction) and laterally outwards, which can be described as the plane of rotation of the hoe wheel 18 with respect to the soil surface 100 to be cultivated encloses a first angle α between 5 and 70°, as shown in Fig. 3. and the intersection m of its plane of rotation with the plane of the soil surface 100 forms a second angle β between 5 and 80° with the direction of advance h of the rotary hoe 10, which is shown schematically in Figure 1. Another aspect contributing to the soil-driving of the hoe wheel 18 is that the hoe wheel 18 has curved blades 24 extending from the direction of the rotation axis t, which are curved and facing forward on the outer side of the hoe wheel 18, i.e., the side remote from the support structure 12. The position of the rotational plane of the hoe wheel 18 and the direction of the bending of the blades 24 together determine the natural direction of rotation A of the hoe wheel 18, such that the blades 24 are inclined rearwardly relative to the natural direction of rotation A. In the present embodiment, the blades 24 are engaged between two discs 26 attached to the hub 20. The ends of the curved blades 24 are each provided with an edge 25 facing towards and away from the discs 26. Preferably, there are about ten blades 24 on each of the two hoe wheels 18.

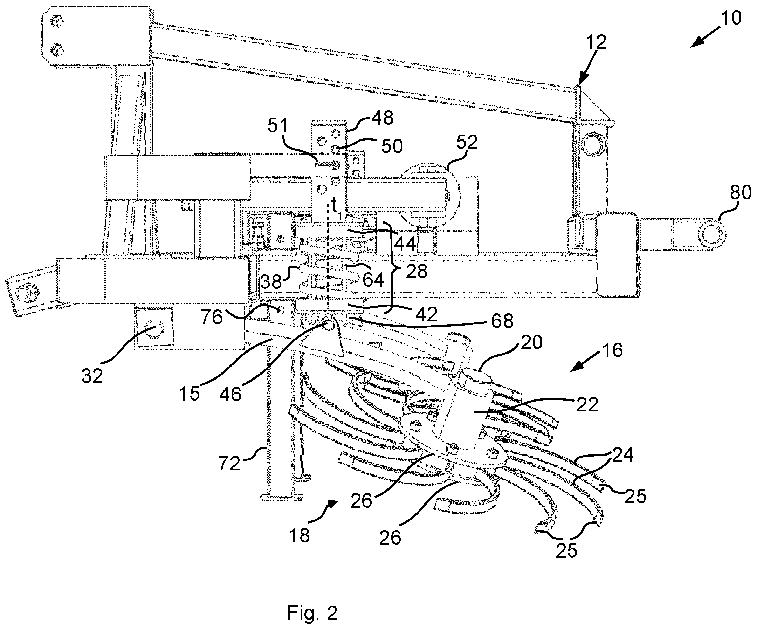

Both fixing mechanisms 14 comprise a first spring deflection mechanism 28 forcing the associated hoe body 16 along the first axis t₁ towards the soil surface, which is best seen in Fig. 2. The axis t₁ is preferably perpendicular to the soil surface 100 (assuming a flat surface), i.e. if the soil surface is horizontal, the axis t₁ is preferably vertical. However, this is not necessary, since the axis t₁, which is inclined relative to the vertical, also has a vertical component, so it is also suitable for implementing a deflection in the soil direction. This line of reasoning applies mutatis mutandis to non-horizontal soil surface 100. In the maximum ground deflection position of the first spring deflection mechanism 28, the hoe wheel 18 extends below the soil surface 100 to the cultivation depth of the rotary hoe 10. For a given size of blades 24, the cultivation depth is determined by the angle α of the plane of rotation of the hoe wheel 18 with the soil surface 100 and the distance of the hub 20 from the soil surface 100. The more the plane of rotation of the hoe wheel 18 is tilted and the lower the hub 20 are lowered, the greater the cultivation depth of the blades 24 penetrating the soil.

It should be noted here that the support structure 12 is preferably parallel to the soil surface 100 during towing, so that when directions are given relative to the soil surface 100, we could also give the same directions with respect to a theoretical plane S perpendicular to the plane of symmetry of the support structure 12, but the reference to the soil surface 100 is more illustrative, so we prefer to use that.

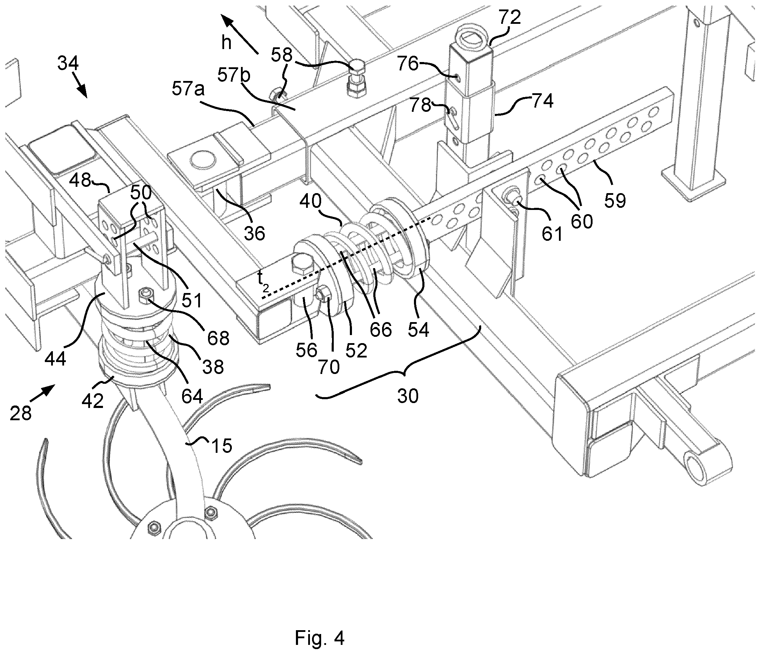

It can be seen in Figure 4, that the fixing mechanism 14 further comprises a second spring deflection mechanism 30 which forces the associated hoe body 16 laterally along a second axis t₂ transverse to the direction of advance h and substantially parallel to the soil surface 100, and outwardly relative to the support structure 12. Thus, the right lateral deflection mechanism 30 forces the hoe body 16 outwards to the right, while the left lateral deflection mechanism 30 forces the hoe body 16 outwards to the left, such that both how wheels 18 extend laterally beyond the support structure 12 in the maximum lateral deflection position allowed. In this position, the lateral width of the rotary hoe 10 is determined by the distance between the blades 24 of the right and left hoe bodies 16 projecting to the right and left, respectively. The axes t₂ of the second spring deflection mechanisms 30 on either side preferably coincide and are perpendicular to the direction of advance h.

In this embodiment, the hoe body 16 is arranged on the suspension arm 15, which is attached to a console 34 via the first spring deflection mechanism 28 and a greasable first pivot 32. The console 34 is connected to the support structure 12 via the second spring deflection mechanism 30 and a greasable second pivot 36.

The two spring deflection mechanisms 28, 30 each contain a spring 38, 40 (preferably a coil spring). The longitudinal axis of the spring 38 of the first spring deflection mechanism 28 coincides with the first t₁ axis, and the longitudinal axis of the spring 40 of the second spring deflection mechanism 30 coincides with the second t₂ axis. In the particular preferred embodiment illustrated in the figures, the first spring 38 has its longitudinal axis vertical, while the second spring 40 has its longitudinal axis horizontal and lateral to the direction of advance h.

In the present embodiment, the spring 38 is sandwiched between a lower spring plate 42 and an upper spring plate 44 (see Figure 2). The lower spring plate 42 is further connected to the suspension arm 15 via a third pivot 46 (preferably a greasable pivot 46). The cultivation depth is preferably adjustable by adjusting the vertical position of the spring 38. In this embodiment, this is implemented by connecting the upper spring plate 44 to the console 34 via a spacer element 48 which can be fixed in a plurality of positions along the first axis t₁. In the present case, the spacer element 48 is a U-shaped profile as can be seen in Figure 4, with transverse through holes 50 to allow mounting at different heights by means of a pin 51 for fixing to the console 34.

In the present embodiment, the spring 40 of the second spring deflection mechanism 30 is also sandwiched between an outer spring plate 52 and an inner spring plate 54 (see Figure 4). The outer spring plate 52 is connected to the console 34 via a greasable fourth pivot 56.

Preferably, not only the cultivation depth but also the working distance between the right and left hoe wheels 18 can be adjusted, which requires the ability to adjust the position of the console 34 laterally. In the present embodiment, this is achieved in that, on the one hand, the support structure 12 comprises a system telescopically extendable in the direction of the second axis t₂, which in this case is formed by two mutually slidable hollow sections 57a, 57b, which can be fixed to each other in the desired position by means of fixing screws 58. The second pivot 36 of the console 34 is connected to the telescopically slidable inner hollow section 57a. On the other hand, the lateral adjustment of the console 34 is ensured by the fact that the inner spring plate 54 of the second spring 40 is connected to the support structure 12 via a support element 59 which can be fixed in a plurality of positions along the second axis t₂. For example, the support element 59 is configured as a flat bar with holes 60 as can be seen in Figure 4, which is fixed to the support structure 12 by a fixing pin 61 passed through one of the holes 60. The desired lateral extension of the support element 59 can be provided by fixing through the corresponding hole 60.

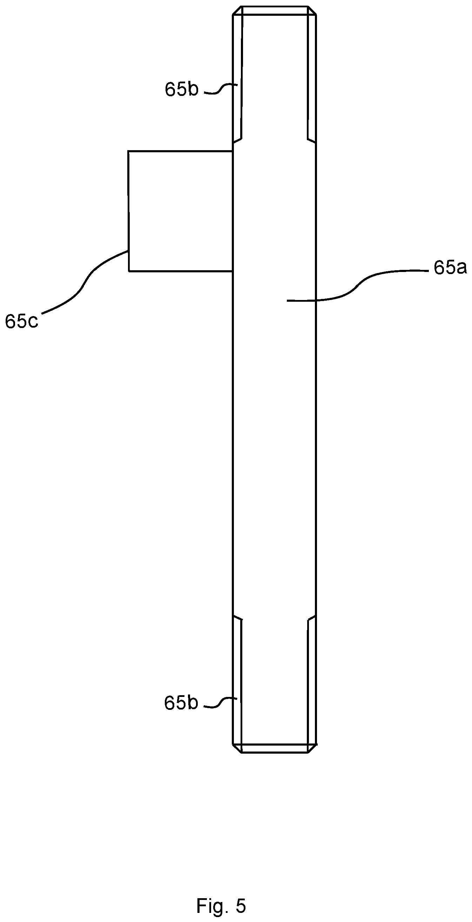

It is advantageous to protect springs 38, 40 against deflection perpendicular to their longitudinal axis, even if relatively large diameter coil springs are used, which naturally resist lateral deflection. In this case, longitudinal stability is provided by means of guiding profiles 64, 66, of which at least one, preferably at least two, is used per spring 38, 40. In the present embodiment, both the guiding profiles 64 and 66 comprise a round steel 65a shown separately in Figure 5. The round steel 65a is provided with threaded ends 65b, and a flat iron 65c is welded to the round steel 65a in the vicinity of one of the threaded ends 65b.

In the first spring 38, parallel to its longitudinal axis (i.e. parallel to the first axis t₁), two guiding profiles 64 are arranged, which connect the lower and upper spring plates 42, 44 in such a way that one of the two spring plates 42, 44 is fixed in a displacement-free manner relative to the guiding profile 64, while the other spring plate 44, 42 and the guiding profile 64 are displaceable relative to each other along the longitudinal axis of the spring 38.

The round steel 65a is arranged in the spring 38 in such a way that the threaded ends 65b of the round steel 65a are passed through a bore in each of the two spring plates 42, 44 and are provided with self-locking nuts 68 outside of the spring plates 42, 44. The distance between the nuts 68 on each side determines the maximum distance between the lower and upper spring plates 42, 44 and thus the longest state of the interposed spring 38, corresponding to a slightly compressed state for preloading. Preferably, the flat iron 65c welded to the round steel 65a is placed in the lower position (i.e. in the vicinity of the lower spring plate 42) so that the lower spring plate 42 is struck by the flat iron 65c on one side and the nut 68 on the other side, so that the lower spring plate 42 cannot move relative to the guiding profile 64. In contrast, the upper spring plate 44 is not secured against displacement relative to the guiding profile 64, so that the guiding profiles 64 in the upper spring plate 44 can be slid, allowing the lower spring plate 42 to slide closer to the upper spring plate 44 and thus compress the spring 38. The advantage of having the guiding profile 64 fixed in the lower spring plate 42 without sliding is that the guiding profile 64 will certainly not interfere with the operation of the second pivot 36 connecting the lower spring plate 42 to the suspension arm 15.

The second spring deflection mechanism 30 works on a similar principle. In this case, the flat iron 65c is placed next to the outer spring plate 52, while the threaded ends 65b of the round steel 65a are fitted with self-locking nuts 70 on the outside of both spring plates 52, 54, so that when the spring 40 is compressed, the inner spring plate 54 and the guiding profile 66 are moved relative to each other. In this case, the guiding profile 66 also do not prevent the operation of the fourth pivot 56 connected to the outer spring plate 52.

For convenience and safety reasons, the support structure 12 may be provided with lowerable and raisable support legs 72, of which the support structure 12 of the present embodiment have two, but of course there may be more or fewer support legs 72. The support legs 72 are each located in a locking hollow section 74 attached to the support structure 12. Each of the two support legs 72 has holes 76 in the sides thereof at different heights, the wall of the locking hollow section 74 also having a hole therein by which, by bringing a pair of holes 76 in a support leg 72 to a height, the support leg 72 can be secured at the height determined by the pair of holes 76 by a locking pin 78 passed through the locking hollow section 74.

On the side of the support structure 12 opposite to the direction of advance, additional attachment points 80 may be provided for attaching additional tillage implements. Such a cultivating device can be, for example, a slat roller, a wedge ring roller or other rotary hoe units known per se.

The rotary hoe 10 shown has a right and a left hoe body 16, however, more or less hoe bodies 16 can be arranged on the rotary hoe 10. For example, two hoe bodies 16 can be mounted on each side of the support structure 12 to increase efficiency. An embodiment is also conceivable in which a single hoe body 16 is arranged on one side of the support structure 12. The latter is particularly advantageous if the support structure 12 of the rotary hoe 10 itself is mounted laterally on a towed structure, in which case another rotary hoe 10 with a mirror-symmetrical design is preferably mounted on the other side of the towed structure, so that the right- and left-hand plant spacings can be cultivated simultaneously.

In the present embodiment, each spring deflection mechanism 28, 30 comprises one spring 38, 40, however, embodiments with more than one spring are also possible, for example the first and second pivots 32, 36 can be replaced by an additional spring each, so that both soil deflection and lateral deflection can be achieved with the first and second springs 38, 40 respectively and the additional spring each.

The embodiment shown is used as follows.

When the support legs 72 of the support structure 12 are in the lowered position, the support structure 12 is attached to a machine (such as a tractor) or to a towed structure in a manner known per se. The position of the right and left side how bodies 16 is then adjusted according to the desired cultivation depth and the required row spacing.

The cultivation depth can be increased by lowering the first spring 38, in which case a pair of holes 50 higher up on the spacer element 48 is chosen as the fixing point and the fixing pin 51 is passed through it. The effect of this is to lower the spring 38, causing the suspension arm 15 connected to the lower spring plate 42 to bend more around the first pivot 32, which results in the hoe wheel 18 of the hoe body 16 mounted on the free end of the suspension arm 15 reaching the soil surface 100 at a steeper angle, thus penetrating and cultivating the soil at a greater depth.

The width of the rotary hoe 10 is adjusted by sliding the telescopic hollow sections 57a, 57b into each other sufficiently and by selecting the attachment point of the support element 59 so as to match to the width corresponding to the row spacing to be cultivated. Preferably, the adjustment is made on both sides so that the rotary hoe 10 remains symmetrical. Preferably, the position of the inner hollow section 57a is first adjusted relative to the surrounding hollow section 57b by sliding the hollow section 57a inside the hollow section 57b and then securing the hollow section 57a in the selected position by means of the locking screws 58, thereby roughly adjusting the desired width. Fine adjustment can be made by means of the support element 59 with holes 60. By removing the fixing pin 61, the support element 59 can be displaced in the desired direction, and the fixing pin 61 is then reinserted in this position in the hole 60 at the fixing point. This can even be easily done during the cultivation of the plant spacings, for example if the person using the rotary hoe 10 finds that the hoe wheels 18 do not enter the spacing between vine stocks or fruit trees sufficiently. The second pivot 36 and the fourth pivot 56 ensure that the inner hollow section 57a and the support element 59 can be moved relative to each other.

Subsequently, additional tillage means (e.g. slat roller, wedge ring roller, additional rotary hoe units, etc.) can be connected to the rear side of the support structure 12 opposite to the direction of advance h via the attachment points 80.

Once the cultivation depth and row width have been set and, if applicable, the additional soil tillage means has been mounted, the rotary hoe 10 is ready for use. The support legs 72 are raised (if not already raised) and secured in the locking hollow section 74 by means of the locking pin 78 passed through the holes 76.

In use, the rotary hoe 10 is towed in the direction of advance h. The edges 25 of the curved blades 24 on the outer side of the tilted hoe wheels 18 face in the direction of advance h and strike the soil, so that the traction causes the soil to exert a force on them with a component in the opposite direction to the direction of advance h. This force causes the hoe wheel 18 to rotate naturally in the opposite direction to the orientation of the blades 24, and therefore the blades 24 can be said to be backwardly inclined with respect to their natural direction of rotation. The combination of the first and second spring deflection mechanisms 28, 30 and the blades 24 being inclined backwards with respect to the direction of rotation together result in the blades 24 rolling down from obstacles such as vine stocks, fruit tree trunks or roots as the hoe wheel 18 rotates. Due to the backward curved design of the blades 24, the vine stock or tree trunk never meets the edges 25, but only the curved side of the blades 24. As a result of the force, the hoe wheel 18 moves laterally towards the support structure 12, which is made possible by the second spring deflection mechanism 30: the lateral force causes compression of the second spring 40 and the console 34 to pivot inwards around the second pivot 36 and with it the suspension arm 15, causing the hoe body 16 to move inwards (in the direction of the support 12, essentially along axis t₂) whereby it is deflected from the vine stock or tree trunk. As soon as the hoe wheel 18 passes over the obstacle, the lateral force on the blades 24 ceases, so that the second spring 40 forces the console 34, and with it the hoe wheel 18, back to their originally set distance.

Rolling down from the root zone takes place in a similar way, except that the blades 24 meet the obstacle in the soil and the first spring deflection mechanism 28, which performs vertical deflection, is also involved in the process. The roots can form an obstacle in both the vertical and horizontal directions for the hoe wheel 18, but the blades 24, which are inclined backwards relative to the direction of rotation, cannot damage the obstacle, instead the hoe wheel 18 transmits the force exerted by the roots to the first spring 38 via the suspension arm 15, which is compressed and allows the suspension arm 15 to tilt upwards around the first pivot 32, thereby allowing the how wheel 18 to be deflected upwards (substantially along the axis t₁) away from the roots. At the same time, the roots may also exert a lateral force, which may result in the how wheel 18 being simultaneously displaced laterally by compression of the second spring 40 as described above. After leaving the root zone, the first and second springs 38, 40 automatically return to their original position, so that the blades 24 of the hoe wheel 18 return to the spacing between the vine stocks or trunks, which can then be cultivated. The possibility of soil and lateral deflection together ensures the damage-free cultivation of the vine or fruit row.

The advantage of spring deflection is that it is highly responsive, which means that the required deflection in the required direction and amount is achieved within moments, so that the root zone and the woody stem are protected even at relatively high cultivation speeds (e.g. 8-10 km/h). An additional advantage is that the simple mechanical feedback control requires no sensors or electronics, making it much cheaper and reducing the potential for failure.

Various modification to the above disclosed embodiment will be apparent to a person skilled in the art without departing from the scope of protection determined by the attached claims.

## Claims

1. A soil-driven rotary hoe (10), in particular for vine and fruit row cultivation, comprising a support structure (12) configured to be suspended on a power machine or a towed structure and at least one hoe body (16) fixed to the support structure (12) by means of a fixing mechanism (14), said hoe body (16) having a hoe wheel (18) which is rotatably embedded about a rotation axis (t), the plane of rotation of the hoe wheel (18) is at a first angle (a) of between 5 and 70° with the surface of the soil to be cultivated, and the intersection (m) of the plane of rotation with the plane of the surface of the soil (100) is at a second angle (β) of between 5 and 80° with the direction of advance of the rotary hoe, the hoe wheel (18) has blades (24) projecting from the direction of the rotation axis (t) and inclined backwards with respect to the natural direction of rotation (A) of the hoe wheel (18), wherein the fixing mechanism (14) comprises a first spring deflection mechanism (28) for forcing the at least one hoe body (16) along a first axis (t₁) towards the surface (100) of the soil to be cultivated and the at least one hoe wheel (18) is arranged such that in the maximum deflection position of the first spring deflection mechanism (28) towards the soil to be cultivated, the hoe wheel (18) extends into the soil to a given cultivation depth, and **characterized in that** the fixing mechanism (14) further comprises a second spring deflection mechanism (30) for forcing the at least one hoe body (16) laterally along a second axis (t₂) transversal to the direction of advance (h) of the rotary hoe (10), and the at least one hoe wheel (18) is further arranged such that in the maximum lateral deflection position of the second spring deflection mechanism (30), the hoe wheel (18) extends laterally beyond the support structure (12) and the fixing mechanism (14).

2. A soil-driven rotary hoe (10) according to claim 1, **characterized in that** a hoe body (16) is fixed to each side of the support structure (12) via a respective fixinging mechanism (14) in such a way that one hoe body (16) extends in one lateral direction perpendicular to the direction of advance (h) and the direction of the surface (100) of the soil, and the other hoe body (16) extends in the other lateral direction, both hoe bodies (16) extending beyond the support structure (12) and the respective fixing mechanism (14) in the maximum lateral deflection position of the respective second spring deflection mechanism (30) of the respective fixing mechanism (14).

3. A soil-driven rotary hoe (10) according to claim 1 or 2, **characterized in that** the hoe body (16) is arranged on a suspension arm (15) which is attached to a console (34) via the first spring deflection mechanism (28) and a first pivot (32), and the console (34) is connected to the support structure (12) via the second spring deflection mechanism (30) and a second pivot (36).

4. A soil-driven rotary hoe (10) according to claim 3, **characterised in that** the first spring deflection mechanism (28) comprises a first spring (38) arranged along the first axis (t₁) and sandwiched between lower and upper spring plates (42, 44), which lower spring plate (42) is connected to the suspension arm (15) via a third pivot (46), and the upper spring plate (44) is connected to the console (34) via a spacer element (48) which can be fixed in several positions along the first axis (t₁) relative to the console (34).

5. A soil-driven rotary hoe (10) according to claim 3 or 4, **characterized in that** the support structure (12) is provided with a system telescopically extendable in the direction of the second axis (t₂), and the console (34) is connected to the telescopically extendable system via the second pivot (36).

6. A soil-driven rotary hoe (10) according to any one of claims 3 to 5, **characterized in that** the second spring deflection mechanism (30) comprises a second spring (40) arranged along the second axis (t₂) and sandwiched between outer and inner spring plates (52, 54), which outer spring plate (52) is connected to the console (34) via a fourth pivot (56), and the inner spring plate (54) is connected to the support structure (12) via a support element (59) which can be fixed in several positions along the second axis (t₂) relative to the support structure (12).

7. A soil-driven rotary hoe (10) according to claim 4, **characterized in that** the lower and upper spring plate (42, 44) of the first spring (38) are connected by at least one first guiding profile (64) arranged along the first axis (t₁), in such a way that one spring plate (42, 44) is fixed in a displacement-free manner relative to the at least one first guiding profile (64), while the other spring plate (44, 42) and the at least one first guiding profile (64) are displaceable along each other.

8. A soil-driven rotary hoe (10) according to claim 6, **characterized in that** the outer and inner spring plate (52, 54) of the second spring (40) are connected by at least one second guiding profile (66) arranged along the second axis (t₂), in such a way that one spring plate (52, 54) is fixed in a displacement-free manner relative to the at least one second guiding profile (66), while the other spring plate (54, 52) and the at least one second guiding profile (66) are displaceable along each other.

9. A soil-driven rotary hoe (10) according to any one of claims 1 to 8, **characterized in that** the support structure (12) is provided with a lowerable and liftable support leg (72), preferably two support legs (72).

10. A soil-driven rotary hoe (10) according to any one of claims 1 to 9, **characterized in that** the blades (24) of the hoe wheel (18) are held between two discs (26).

## Patentansprüche

1. Bodenbetriebene Drehfräse (10), insbesondere für die Reihenkultur von Wein und Obst, umfassend eine Trägerstruktur (12), die konfiguriert ist, um an einer Kraftmaschine oder einer gezogenen Struktur aufgehängt zu werden, und mindestens einen Fräskörper (16), der mittels eines Befestigungsmechanismus (14) an der Trägerstruktur (12) befestigt ist, wobei der Fräskörper (16) ein Fräsrad (18) aufweist, das um eine Drehachse (t) drehbar eingebettet ist, die Drehebene des Fräsrades (18) mit der Oberfläche des zu bearbeitenden Bodens in einem ersten Winkel (a) zwischen 5 und 70° steht und der Schnittpunkt (m) der Drehebene mit der Ebene der Bodenoberfläche (100) in einem zweiten Winkel (ß) zwischen 5 und 80° mit der Vorschubrichtung der Drehfräse steht, das Fräsrad (18) Schaufelblätter (24) aufweist, die aus der Richtung der Drehachse (t) herausragen und in Bezug auf die natürliche Drehrichtung (A) des Fräsrads (18) nach hinten geneigt sind, wobei der Befestigungsmechanismus (14) einen ersten Federauslenkungsmechanismus (28) umfasst, um den mindestens einen Fräskörper (16) entlang einer ersten Achse (t₁) in Richtung der Oberfläche (100) des zu bearbeitenden Bodens zu drücken, und das mindestens eine Fräsrad (18) derart angeordnet ist, dass sich das Fräsrad (18) in der maximalen Auslenkungsposition des ersten Federauslenkungsmechanismus (28) in Richtung des zu bearbeitenden Bodens bis zu einer gegebenen Bearbeitungstiefe in den Boden hinein erstreckt, und **dadurch gekennzeichnet, dass** der Befestigungsmechanismus (14) weiter einen zweiten Federauslenkungsmechanismus (30) umfasst, um den mindestens einen Fräskörper (16) seitlich entlang einer zweiten Achse (t₂) quer zur Vorschubrichtung (h) der Drehfräse (10) zu drücken, und das mindestens eine Fräsrad (18) weiter derart angeordnet ist, dass sich das Fräsrad (18) in der maximalen seitlichen Auslenkungsposition des zweiten Federauslenkungsmechanismus (30) seitlich über die Trägerstruktur (12) und den Befestigungsmechanismus (14) hinaus erstreckt.

2. Bodenbetriebene Drehfräse (10) nach Anspruch 1, **dadurch gekennzeichnet, dass** an jeder Seite der Trägerstruktur (12) über einen jeweiligen Befestigungsmechanismus (14) ein Fräskörper (16) derart befestigt ist, dass sich ein Fräskörper (16) in einer Seitenrichtung senkrecht zur Vorschubrichtung (h) und der Richtung der Bodenoberfläche (100) erstreckt, und der andere Fräskörper (16) sich in der anderen Seitenrichtung erstreckt, wobei sich beide Fräskörper (16) über die Trägerstruktur (12) und den jeweiligen Befestigungsmechanismus (14) hinaus in die maximale seitliche Auslenkungsposition des jeweiligen zweiten Federauslenkungsmechanismus (30) des jeweiligen Befestigungsmechanismus (14) erstrecken.

3. Bodenbetriebene Drehfräse (10) nach Anspruch 1 oder 2, **dadurch gekennzeichnet, dass** der Fräskörper (16) an einem Aufhängearm (15) angeordnet ist, der über den ersten Federauslenkungsmechanismus (28) und einen ersten Drehzapfen (32) an eine Konsole (34) angebracht ist, und die Konsole (34) über den zweiten Federauslenkungsmechanismus (30) und einen zweiten Drehzapfen (36) mit der Trägerstruktur (12) verbunden ist.

4. Bodenbetriebene Drehfräse (10) nach Anspruch 3, **dadurch gekennzeichnet, dass** der erste Federauslenkungsmechanismus (28) eine erste Feder (38) umfasst, die entlang der ersten Achse (t₁) angeordnet ist und zwischen einem unteren und einem oberen Federteller (42, 44) sandwichartig angeordnet ist, wobei der untere Federteller (42) über einen dritten Drehzapfen (46) mit dem Aufhängungsarm (15) verbunden ist und der obere Federteller (44) über ein Abstandselement (48) mit der Konsole (34) verbunden ist, das in mehreren Positionen entlang der ersten Achse (t₁) relativ zur Konsole (34) befestigt werden kann.

5. Bodenbetriebene Drehfräse (10) nach Anspruch 3 oder 4, **dadurch gekennzeichnet, dass** die Trägerstruktur (12) mit einem in der Richtung der zweiten Achse (t₂) teleskopisch ausfahrbaren System bereitgestellt ist, und die Konsole (34) über den zweiten Drehzapfen (36) mit dem teleskopisch ausfahrbaren System verbunden ist.

6. Bodenbetriebene Drehfräse (10) nach einem der Ansprüche 3 bis 5, **dadurch gekennzeichnet, dass** der zweite Federauslenkungsmechanismus (30) eine zweite Feder (40) umfasst, die entlang der zweiten Achse (t₂) angeordnet ist und zwischen einem äußeren und einem inneren Federteller (52, 54) sandwichartig angeordnet ist, wobei der äußere Federteller (52) über einen vierten Drehzapfen (56) mit der Konsole (34) verbunden ist und der innere Federteller (54) über ein Trägerelement (59) mit der Trägerstruktur (12) verbunden ist, das in mehreren Positionen entlang der zweiten Achse (t₂) relativ zur Trägerstruktur (12) befestigt werden kann.

7. Bodenbetriebene Drehfräse (10) nach Anspruch 4, **dadurch gekennzeichnet, dass** der untere und obere Federteller (42, 44) der ersten Feder (38) durch mindestens ein entlang der ersten Achse (t₁) angeordnetes erstes Führungsprofil (64) verbunden sind, derart dass der eine Federteller (42, 44) relativ zu dem mindestens einen ersten Führungsprofil (64) verschiebungsfrei befestigt ist, während der andere Federteller (44, 42) und das mindestens eine erste Führungsprofil (64) aneinander entlang verschiebbar sind.

8. Bodenbetriebene Drehfräse (10) nach Anspruch 6, **dadurch gekennzeichnet, dass** der äußere und innere Federteller (52, 54) der zweiten Feder (40) durch mindestens ein entlang der zweiten Achse (t₂) angeordnetes zweites Führungsprofil (66) verbunden sind, derart, dass der eine Federteller (52, 54) relativ zu dem mindestens einen zweiten Führungsprofil (66) verschiebungsfrei befestigt ist, während der andere Federteller (54, 52) und das mindestens eine zweite Führungsprofil (66) aneinander entlang verschiebbar sind.

9. Bodenbetriebene Drehfräse (10) nach einem der Ansprüche 1 bis 8, **dadurch gekennzeichnet, dass** die Trägerstruktur (12) mit einem absenkbaren und anhebbaren Trägerbein (72), bevorzugt zwei Trägerbeinen (72), bereitgestellt ist.

10. Bodenbetriebene Drehfräse (10) nach einem der Ansprüche 1 bis 9, **dadurch gekennzeichnet, dass** die Schaufelblätter (24) des Fräsrades (18) zwischen zwei Scheiben (26) gehalten werden.

## Revendications

1. Houe rotative entraînée par le sol (10), en particulier destinée à la culture de la vigne et de rangées de fruitiers, comprenant une structure de support (12) configurée pour être suspendue sur une machine motrice ou une structure tractée et au moins un corps de houe (16) fixé à la structure de support (12) au moyen d'un mécanisme de fixation (14), ledit corps de houe (16) présentant une roue de houe (18) qui est intégrée de manière rotative autour d'un axe de rotation (t), le plan de rotation de la roue de houe (18) forme un premier angle (a) compris entre 5 et 70° par rapport à la surface du sol à cultiver, et l'intersection (m) du plan de rotation avec le plan de la surface du sol (100) forme un second angle (β) compris entre 5 et 80° par rapport à la direction d'avance de la houe rotative, la roue de houe (18) présente des lames (24) faisant saillie depuis la direction de l'axe de rotation (t) et étant inclinées vers l'arrière par rapport au sens naturel de rotation (A) de la roue de houe (18), dans laquelle le mécanisme de fixation (14) comprend un premier mécanisme de déviation de ressort (28) destiné à forcer le au moins un corps de houe (16) le long d'un premier axe (t₁) vers la surface (100) du sol à cultiver et la au moins une roue de houe (18) est agencée de sorte que dans la position de déviation maximale du premier mécanisme de déviation de ressort (28) vers le sol à cultiver, la roue de houe (18) s'étende dans le sol sur une profondeur de culture donnée, et **caractérisée en ce que** le mécanisme de fixation (14) comprend en outre un second mécanisme de déviation de ressort (30) destiné à forcer le au moins un corps de houe (16) latéralement le long d'un second axe (t₂) transversal à la direction d'avance (h) de la houe rotative (10), et la au moins une roue de houe (18) est en outre agencée de sorte que dans la position de déviation latérale maximale du second mécanisme de déviation de ressort (30), la roue de houe (18) s'étende latéralement au-delà de la structure de support (12) et du mécanisme de fixation (14).

2. Houe rotative entraînée par le sol (10) selon la revendication 1, **caractérisée en ce qu'**un corps de houe (16) est fixé de chaque côté de la structure de support (12) par l'intermédiaire d'un mécanisme de fixation respectif (14) de sorte qu'un corps de houe (16) s'étende dans une direction latérale perpendiculaire à la direction d'avance (h) et à la direction de la surface (100) du sol, et que l'autre corps de houe (16) s'étende dans l'autre direction latérale, les deux corps de houe (16) s'étendant au-delà de la structure de support (12) et du mécanisme de fixation respectif (14) dans la position de déviation latérale maximale du second mécanisme de déviation de ressort respectif (30) du mécanisme de fixation respectif (14).

3. Houe rotative entraînée par le sol (10) selon la revendication 1 ou 2, **caractérisée en ce que** le corps de houe (16) est agencé sur un bras de suspension (15) qui est fixé à une console (34) par l'intermédiaire du premier mécanisme de déviation de ressort (28) et d'un premier pivot (32), et la console (34) est reliée à la structure de support (12) par l'intermédiaire du second mécanisme de déviation de ressort (30) et d'un deuxième pivot (36).

4. Houe rotative entraînée par le sol (10) selon la revendication 3, **caractérisée en ce que** le premier mécanisme de déviation de ressort (28) comprend un premier ressort (38) agencé le long du premier axe (t₁) et pris en sandwich entre des coupelles de ressort inférieure et supérieure (42, 44), laquelle coupelle de ressort inférieure (42) est reliée au bras de suspension (15) par l'intermédiaire d'un troisième pivot (46), et la coupelle de ressort supérieure (44) est reliée à la console (34) par l'intermédiaire d'un élément d'espacement (48) qui peut être fixé en différentes positions le long du premier axe (t₁) par rapport à la console (34).

5. Houe rotative entraînée par le sol (10) selon la revendication 3 ou 4, **caractérisée en ce que** la structure de support (12) est dotée d'un système déployable de manière télescopique dans la direction du second axe (t₂), et la console (34) est reliée au système déployable de manière télescopique par l'intermédiaire du deuxième pivot (36).

6. Houe rotative entraînée par le sol (10) selon l'une quelconque des revendications 3 à 5, **caractérisée en ce que** le second mécanisme de déviation de ressort (30) comprend un second ressort (40) agencé le long du second axe (t₂) et pris en sandwich entre des coupelles de ressort externe et interne (52, 54), laquelle coupelle de ressort externe (52) est reliée à la console (34) par l'intermédiaire d'un quatrième pivot (56), et la coupelle de ressort interne (54) est reliée à la structure de support (12) par l'intermédiaire d'un élément de support (59) qui peut être fixé en différentes positions le long du second axe (t₂) par rapport à la structure de support (12).

7. Houe rotative entraînée par le sol (10) selon la revendication 4, **caractérisée en ce que** les coupelles de ressort inférieure et supérieure (42, 44) du premier ressort (38) sont reliées par au moins un premier profilé de guidage (64) agencé le long du premier axe (t₁), de sorte qu'une coupelle de ressort (42, 44) soit fixée sans déplacement possible par rapport à le au moins un premier profilé de guidage (64), alors que l'autre coupelle de ressort (44, 42) et le au moins un premier profilé de guidage (64) sont déplaçables le long l'un de l'autre.

8. Houe rotative entraînée par le sol (10) selon la revendication 6, **caractérisée en ce que** les coupelles de ressort externe et interne (52, 54) du second ressort (40) sont reliées par au moins un second profilé de guidage (66) agencé le long du second axe (t₂), de sorte qu'une coupelle de ressort (52, 54) soit fixée sans déplacement possible par rapport à le au moins un second profilé de guidage (66), alors que l'autre coupelle de ressort (54, 52) et le au moins un second profilé de guidage (66) sont déplaçables le long l'un de l'autre.

9. Houe rotative entraînée par le sol (10) selon l'une quelconque des revendications 1 à 8, **caractérisée en ce que** la structure de support (12) est dotée d'un pied de support abaissable et relevable (72), de préférence de deux pieds de support (72).

10. Houe rotative entraînée par le sol (10) selon l'une quelconque des revendications 1 à 9, **caractérisée en ce que** les lames (24) de la roue de houe (18) sont maintenues entre deux disques (26).
